# EUROPÄISCHE PATENTSCHRIFT

(11) **EP 0 865 622 B1**
(45) Veröffentlichungstag und Bekanntmachung des Hinweises auf die Patenterteilung: **21.07.1999**
(21) Anmeldenummer: 96946068.2
(22) Anmeldetag: 04.12.1996
(51) Int. Cl.: G02B 6/38

(54) **VERSCHLUSSTEIL**
SEALING PART
ELEMENT DE FERMETURE

(30) Priorität: 08.12.1995 DE 19547523
(43) Veröffentlichungstag der Anmeldung: 23.09.1998
(73) Patentinhaber: SIEMENS AKTIENGESELLSCHAFT, 80333 München (DE)
(72) Erfinder: FAIST, Eugen, D-13437 Berlin (DE); BRUCH, Helmut, D-13581 Berlin (DE); SIEBER, Christian, D-13156 Berlin (DE)
(86) Internationale Anmeldenummer: DE9602377
(87) Internationale Veröffentlichungsnummer: WO9722026

(56) Entgegenhaltungen:
- DE-C- 3 925 535
- FR-A- 2 331 804
- US-A- 4 105 285
- US-A- 5 395 360

## Beschreibung

Die Erfindung bezieht sich auf ein Verschlußteil mit einer Hülse, die zur Aufnahme einer optischen Kopplungsbuchse ausgebildet ist und die Außenseite der Buchse eng anliegend umschließt.

Um die Aufnahmebuchsen für Lichtwellenleiter an elektrooptischen Modulen ab Fertigungsprozeß bis zur Inbetriebnahme des Moduls sicher zu verschließen, werden geeignete Verschlußteile verwendet. Dabei sollen die Verschlußteile die Aufnahmebuchsen schmutz- und wasserdicht verschließen und eine sichere und definierte Funktionslage beibehalten. Außerdem sollte eine Selbstverschmutzung der Aufnahmebuchse durch die Benutzung des Verschlußteils ausgeschlossen sein und der Ablauf von Flüssigkeit bei Grobdichtheitsprüfung und Reinigung des Moduls ermöglicht werden.

In der US-5,243,678 ist ein Schutzstecker zum Verschließen eines elektrooptischen Moduls beschrieben. An einem Griffstück ist ein Abdeckflansch angebracht, der wenigstens einen parallelen Ausrichtstift trägt. Die Stirnseite des Ausrichtstifts ist Vertiefungen eines optisch aktiven Bauelements angepaßt. Der Ausrichtstift wird von einem am Abdeckflansch angebrachten Kragen umgeben, der an seiner Außenseite Preßstege trägt. Der Ausrichtstift durchdringt im eingesteckten Zustand vollständig eine Aufnahmebuchse des elektrooptischen Moduls. Eine Aufnahmebucht des Moduls, in der sich die Aufnahmebuchse befindet, umschließt dabei den Kragen des Schutzsteckers, wobei der Schutzstecker durch die Preßstege in der Aufnahmebucht fixiert wird. Der Abfeckflansch dichtet die Aufnahmebucht stirnseitig vollständig ab. Der Ausrichtstift tritt aus dem hinteren Ende der Aufnahmebuchse aus und richtet mit seiner Stirnseite ein optisch aktives Bauelement aus. Diese vorläufige Ausrichtung erfolgt, um das optisch aktive Bauelement dauerhaft im Modul ausgerichtet befestigen zu können. Im weiteren soll der Schutzstecker das optisch aktive Bauelement und die Aufnahmebuchse vor Verschmutzung schützen. Der Schutzstecker kann allerdings eine Selbstverschmutzung nicht verhindern, da er durch die Aufnahmebuchse bis zum optisch aktiven Bauelement ragt. Ebenso ist ein Schutz gegen Wasser nur unzureichend gewährleistet.

In der EP-0 312 147 A2 wird eine Schutzkappe für Lichtwellenleitersteckverbindungen beschrieben. Die Schutzkappe bietet an einem Zwischenkörper beidseitig Anschlußflächen für ein Kupplungsteil und einen Stecker. Dabei sind die Anschlußflächen sich axial gegenüberstehend angebracht und ermöglichen die gleichzeitige Aufnahme des Kupplungsteils und des Stekkers. Die Schutzkappe verhindert im wesentlichen nur die Staubablagerung auf der empfindlichen Stirnseite des Lichtwellenleiters im Stecker bzw. in der Kupplung. Wasserdicht ist diese Schutzkappe nicht.

Ein Verschlußteil der eingangs genannten Art ist in der US-4,640,575 in Form einer Schutzkappe für eine Steckbuchse zur Aufnahme von Lichtwellenleitern beschrieben. Die Steckbuchse ist an einer Grundplatte befestigt. Seitlich neben dieser ist ebenfalls an der Grundplatte die Schutzkappe angebracht, die eine federnde Lagerung aufweist. Sofern die Steckbuchse nicht mit einem Stecker verbunden ist, deckt die Schutzkappe, die aus einem elastischen Material besteht, die Buchse außen umgreifend gegen Staub ab. Wird ein Lichtwellenleiterstecker aus der Buchse entfernt, schnappt die Schutzkappe über die Buchse und bedeckt diese. Durch zusätzliche axiale Kraft kann die Schutzkappe auf die Buchse fest aufgedrückt werden. Diese Schutzkappe ist ungeeignet für elektrooptische Module mit Aufnahmebuchten und garantiert keinen hinreichenden Schutz vor Feuchtigkeit.

Der vorliegenden Erfindung liegt daher die Aufgabe zugrunde, ein Verschlußteil der eingangs erwähnten Art zu schaffen, das die Aufnahmebuchse für Lichtwellenleiter an elektrooptischen Modulen schmutz- und wasserdicht verschließt, eine sichere und definierte Funktionslage beibehält, eine Selbstverschmutzung ausschließt und den Ablauf von Flüssigkeit bei Grobdichtheitsprüfung und Reinigung des Moduls ermöglicht.

Die Aufgabe wird erfindungsgemäß durch ein Verschlußteil gemäß Anspruch 1 gelöst.

Im zusammengefügten Zustand von Verschlußteil und Modul wirken erfindungsgemäß das Dichtelement mit der stirnseitigen Berandung und die Hülse mit der äußeren Mantelfläche der Aufnahmebuchse abdichtend zusammen. Durch das flächige Anschmiegen der Fase des Dichtelements an die stirnseitige Berandung der Kopplungsbuchse wird diese in vorteilhafter Weise sicher gegen Flüssigkeiten und Schmutz geschützt. Da das Dichtelement nicht in die Buchse hineinreicht, kann diese auch nicht durch am Dichtelement anhaftende Schmutzpartikel verunreinigt werden.

Hinzukommend garantiert die Hülse eine Vorführung des Verschlußteils axial zur Kopplungsbuchse und gewährleistet eine sichere Funktionslage des Verschlußteils. Der stramme Sitz der eng an der äußeren Buchsenmantelfläche anliegenden Hülse dient einerseits zur Abdichtung, andererseits zum festen Andrücken des Dichtelements an die Buchse. Eine vorteilhafte Anpassung des Innendurchmessers der Hülse an den Außendurchmesser des Buchsenmantels führt bei elastisch ausgelegten Hülsen zu einer Querschnittsvergrößerung im aufgesteckten Zustand. Die Hülse wird beim Aufstecken auf die Buchse leicht gestaucht und damit im Querschnitt leicht vergrößert. Im aufgesteckten Zustand wird infolge der Querschnittsvergrößerung die Hülse radial auf den Buchsenmantel gepreßt und eine gewünschte Haft- und Dichtwirkung erzielt. Umgekehrt tritt beim Abziehen der Hülse durch Überdehnung eine Querschnittsverkleinerung auf, die eine gewisse zusätzliche Haftwirkung vermittelt. Jedoch soll die Anpassung der Durchmesser zueinander so gewählt sein, daß das Abziehen der Hülse mit vertretbarem Kraftaufwand und ohne materialermüdende Belastung erfolgen kann.

In einer weiteren vorteilhaften Ausführungsform ist das Dichtelement als Dichtstopfen aus weichem Kunststoff gefertigt. Der Außendurchmesser des Stopfens ist dabei größer als der Innendurchmesser der Buchse, so daß die Fase des Stopfens die stirnseitige Berandung der Buchse berührt. Durch axialen Druck wird der Stopfen gegen die Kopplungsbuchse gepreßt. Radial den Stopfen umhüllend befindet sich die Hülse, die jedoch ausreichend Platz für eine radiale Ausdehnung des Stopfens infolge des axialen Drucks gewährleistet.

In einer vorteilhaften Auführungsform weist die Hülse zumindest einen abdichtenden Bereich auf, der die äußere Umrandung der Kopplungsbuchse fest umgibt und diese sicher gegen Staub und Feuchtigkeit schützt. Die zweiflächige Abdichtung der Kopplungsbuchse durch das Dichtelement an der stirnseitigen Berandung und durch die Hülse an der äußeren Umrandung der Kopplungsbuchse, die als Aufnahmebuchse für einen lichtwellenleitertragenden Steckstift geformt ist, garantiert einen besonders wirkungsvollen Schutz.

Ein besonders einfach aufgebautes Verschlußteil ist erfindungsgemäß einteilig aus einem geeigneten weichen und elastischen Kunststoff hergestellt. Die Hülse und das Dichtelement können somit vorteilhaft und wirkungsvoll die Kopplungsbuchse schützen. Eine mehrteilige Ausführungsform des Verschlußteils ist ebenfalls möglich. Das Dichtelement ist dabei aus einem elastischeren Kunststoff als der Grundkörper gefertigt. Die Hülse kann ebenfalls aus einem elastischen Kunststoff gefertigt sein, ein festeres Material wird jedoch bevorzugt. Zusätzlich kann die Hülse in vorteilhafter Weise innen angebrachte Dichtmittel tragen, die zur besseren Fixierung des Verschlußteils auch eine günstigere Dichtwirkung ermöglichen. Ein besonders bevorzugtes Material ist Silikonkautschuk, der z. B. unter dem Handelsnamen SILOPREN der Fa. Bayer handelsüblich ist.

In einer weiteren vorteilhaften Ausführungsform trägt der Grundkörper in seinem hinteren sich an einen Anschlagflansch anschließenden Bereich Klemmrippen. Diese dienen zur weiteren Fixierung und Ausrichtung des Verschlußteils. Gleichzeitig gestatten die von den Klemmrippen und der Aufnahmebucht gebildeten und zur Längsachse des Verschlußteils ausgerichteten Hohlräume den Abfluß von in die Aufnahmebucht eingedrungener Flüssigkeit. Bei einer Reinigung des Moduls oder bei einer Grobdichtheitsprüfung wird ein Eindringen von Reinigungsflüssigkeit in die Aufnahmebucht nicht vollständig verhindert. Das erfindungsgemäße Verschlußteil garantiert jedoch einen sicheren Schutz der Kopplungsbuchse gegen Flüssigkeit und Staub und gestattet in besonders vorteilhafter Weise das Abfließen von in die Aufnahmebucht eingedrungener Flüssigkeit.

Die Arretierung des Verschlußteils an einem elektrooptischen Modul kann in vorteilhafter Weise auch durch Widerlagerung von Rastflächen modulseitiger Rastarme in geeigneten Aufnahmeflächen am Verschlußteil erfolgen. Die Aufnahmeflächen am Verschlußteil können sich sowohl an der Hülse, aber auch an einem Grundkörper befinden. Die Hülse ist vorteilhaft so ausgebildet, daß sie Vertiefungen zur Aufnahme der Rastarme aufweist.

Ein zusätzliches und damit besonders wirkungsvolles Befestigungsmittel stellen an dem Verschlußteil angebrachte Arretierungsflächen dar. Diese greifen zusätzlich in die Rastflächen modulseitiger Rastarme ein und fixieren das Verschlußteil ideal in der Aufnahmebuchse. Mittels der verschlußteilseitigen Arretierungsflächen und/oder durch am Verschlußteil befindliche Aufnahmeflächen ist das Verschließen einer Vielzahl unterschiedlicher Kopplungsstellen möglich.

Die Erfindung wird im folgenden anhand bevorzugter Ausführungsformen näher beschrieben; es zeigen:
Figur 1 ein erfindungsgemäßes Verschlußteil,
Figur 2 ein weiteres erfindungsgemäße Verschlußteil in perspektivischer Darstellung,
Figur 3 ein erfindungsgemäßes Verschlußteil, das eine Kopplungsbuchse in einer SC-Bucht verschließt,
Figur 4 zeigt ein Verschlußteil für zwei Aufnahmebuchsen und
Figur 5 dasselbe Verschlußteil in Seitendarstellung.

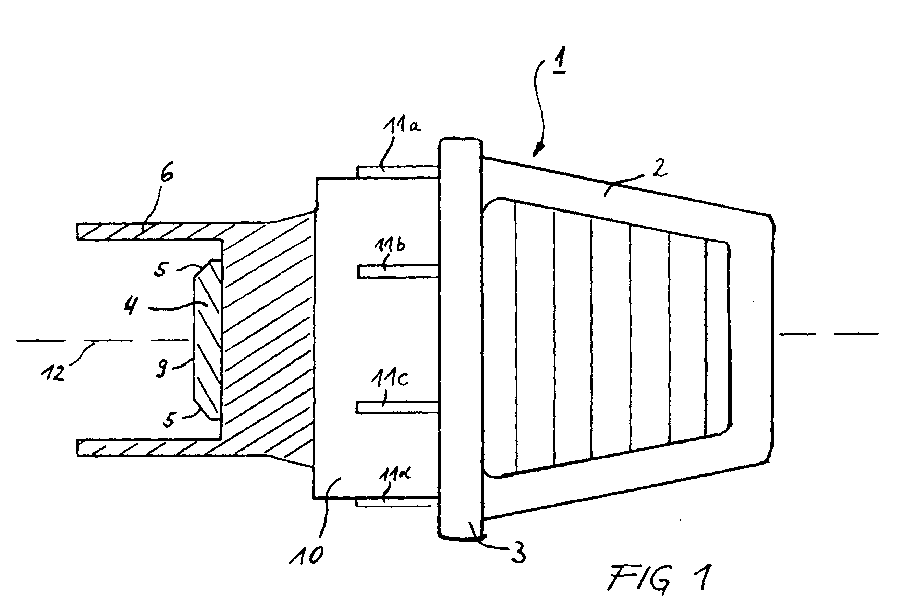

Figur 1 zeigt ein erfindungsgemäßes Verschlußteil 1 mit einem Griffstück 2 und einem sich an das Griffstück 2 anschließenden Anschlagflansch 3. An den Flansch 3 schließt sich ein im Querschnitt etwa rechteckiger Grundkörper 10 an. Dieser trägt am Anschlagflansch 3 beginnende und zur Figurenachse 12 parallel ausgerichtete Klemmrippen lla-lld. Der Grundkörper 10 geht in seinem dem Anschlagflansch 3 abgewandten Teil in eine Hülse 6 mit einem kreisförmigen Querschnitt über. Die Hülse 6 umgibt koaxial ein zentrales Dichtelement 4 mit einer stirnseitigen Fase 5 und steht über der Stirnfläche 9 des Dichtelements 4 über. Die Fase 5 ist einer stirnseitigen Berandung einer kopplungsseitigen Buchse flächig angepaßt.

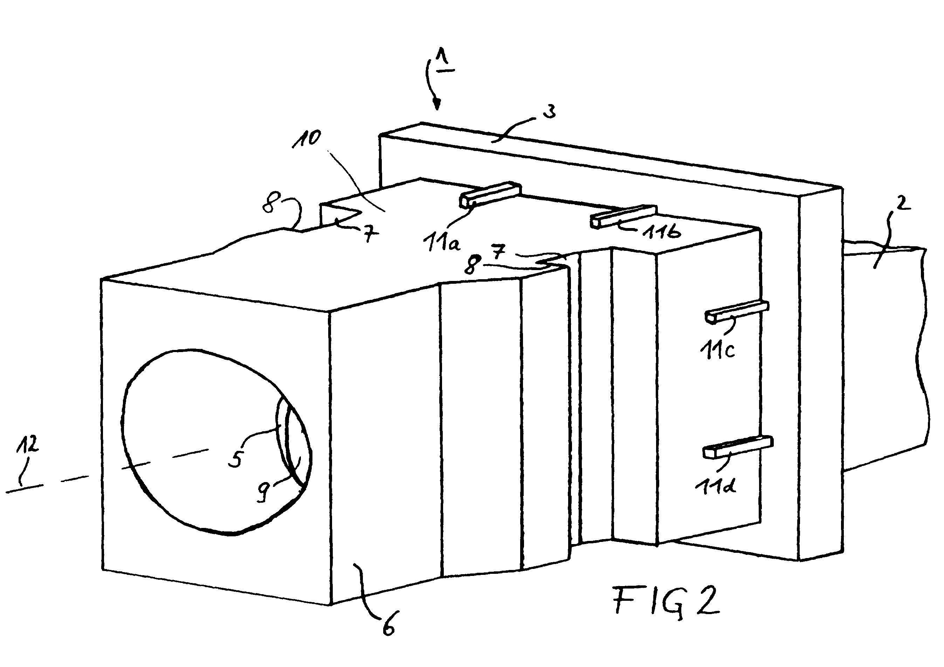

Figur 2 stellt ein erfindungsgemäßes Verschlußteil perspektivisch dar. Die Bezugszeichen sind denen der Figur 1 identisch. Die Hülse 6 ist hier in ihrem vorderen Bereich im Außenquerschnitt rechteckig dargestellt, kann jedoch auch einem anderen, insbesondere runden, Querschnitt aufweisen. Der Außenquerschnitt der Hülse 6 kann auch unterschiedlich ausgebildet sein. Vorteilhaft ist beispielsweise eine runde oder kreisförmige Gestaltung im vorderen Bereich der Hülse 6, hingegen eine in etwa rechteckige Form für den hinteren Bereich. Am Grundkörper 10 beginnend und zur Hülse sich fortsetzend sind zweiseitig Vertiefungen 7 zur Aufnahme von kopplungsseitigen Rastarmen ausgespart. Die Vertiefungen 7 werden an einer ihrer Seiten durch zur Figurenachse 12 in etwa senkrecht verlaufende Aufnahmeflächen 8 begrenzt. Die Aufnahmeflächen 8 ermöglichen eine Widerlagerung von kopplungsseitigen Rastarmen und stabilisieren zusätzlich das Verschlußteil 1.

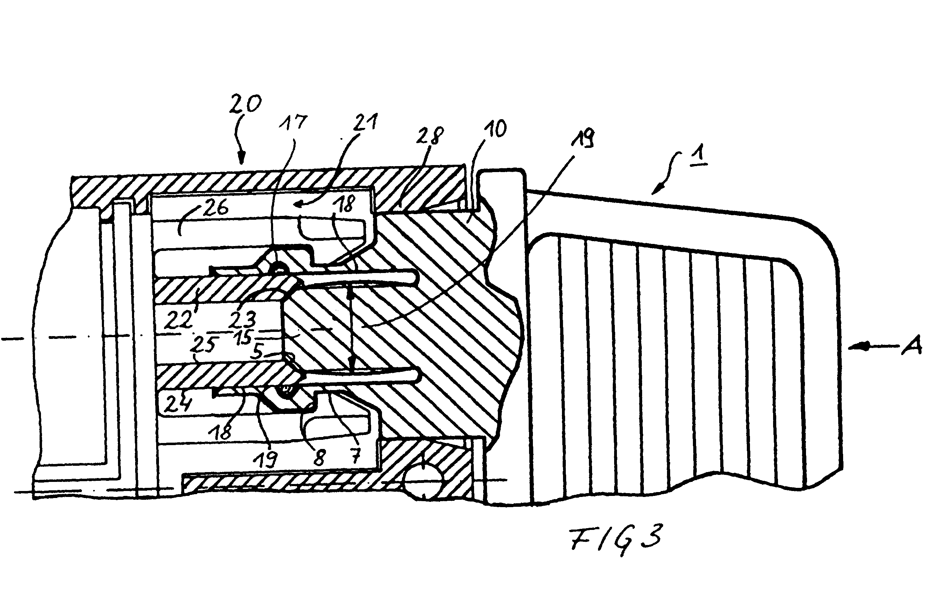

Figur 3 verdeutlicht die dichtende Wirkung eines erfindungsgemäßen Verschlußteils. Das Verschlußteil 1 ist mit seiner Hülse 18 und seinem Dichtelement 15 in die SC-Bucht 21 eines elektrooptischen Moduls 20 eingesteckt und verschließt die in der Bucht 21 befindliche Kopplungsbuchse 22 für Lichtwellenleiter. Die Hülse 18 umschließt die äußere Berandung 24 der Buchse 22 dicht anliegend und fixiert dadurch das Verschlußteil 1 in der SC-Bucht 21 und dichtet die Buchse 22 ab. Die Dichtwirkung wird mit der Fase 5 des Dichtelements 15 vorteilhaft ergänzt. Da das Dichtelement 15 nicht in die Kopplungsbuchse 22 hineinragt, ist eine Selbstverschmutzung durch am Dichtelement 15 anhaftende Schmutzpartikel ausgeschlossen. Die Innenwand 25 der Buchse 22, die zur Aufnahme des Lichtwellenleiterstifts dient, wird nicht berührt und eine Schmutzablagerung an der Innenwand 25 vermieden.

Unter Einfluß eines Drucks A in Richtung Buchse 22 wird das Dichtelement 15 gegen die stirnseitige Berandung 23 der Buchse gepreßt. Dadurch wird ein optimaler Schutz erreicht. Durch den fest anhaftenden Sitz der Hülse 18 an der Außenseite 24 der Buchse 22 wird der Druck A auf den Dichtstopfen 15 übertragen. Bei der Aufrechterhaltung des Drucks A unterstützend wirken in die Vertiefungen 7 eingerastete Rastarme und/oder eine Klemmverbindung zwischen den in die Bucht hineinreichenden Klemmrippen (nicht dargestellt) des Grundkörpers 10 und der vorderen Berandung 28 der SC-Bucht 21 oder ein anderes geeignetes Befestigungsmittel.

Durch den Druck A in Richtung der Buchse 22 dehnt sich das hier als Dichtstopfen dargestellte Dichtelement 15 radial aus. Die Hülse 18, die den Stopfen 15 umgibt, läßt ausreichend Raum für die radiale Ausdehnung 19. Im Gegensatz zu der in Figur 1 dargestellten Hülse 6 zieht sich der Ansatzpunkt der Hülse 18 tiefer in den Grundkörper 10 hinein. Der Dichtstopfen 15 ist einteilig mit der Hülse 18 aus einem elastischen Kunststoff geformt. Eine zweiteilige Ausführung des Stopfens 15 und der Hülse 18 ist ebenfalls möglich.

Eine vorteilhafte Weiterbildung des erfindungsgemäßen Gedankens wird durch zusätzliche an der Innenwand 19 der Hülse 18 umlaufende Dichtmittel 17 erzielt. Die Dichtmittel 17 umgreifen bei erfindungsgemäßer Nutzung des Verschlußteils 1 die Außenseite 24 der Kopplungsbuchse 22. Neben einer günstigeren Dichtwirkung ist das Verschlußteil 1 zusätzlich radial fixiert. Das Dichtmittel 17 ist vorteilhaft als teilweise in die Innenwand 19 der Hülse 18 eingebrachter Dichtring ausgebildet.

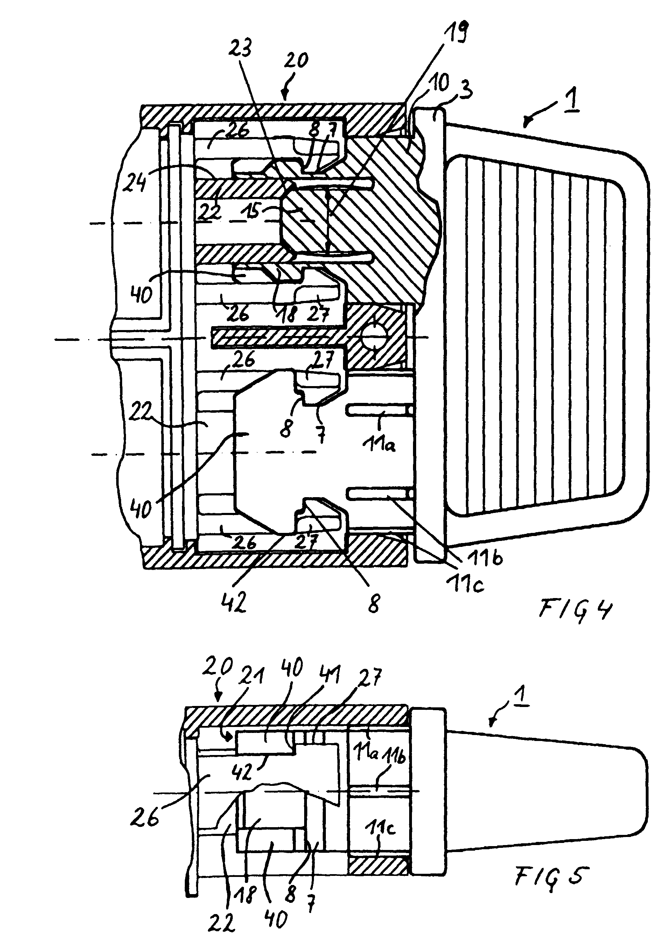

Figur 4 zeigt ein Verschlußteil für zwei nebeneinander befindliche Aufnahmebuchsen. Am Verschlußteil 1 sind die Hülse 18 zweiseitig umgebend Arretierungsflächen 40 ausgebildet. Da die Arretierungsflächen 40 den Grundkörper 10 zumindest teilweise begrenzen, sind die Klemmrippen lla - llb an der Außenseite der Arretierungsflächen 40 angeordnet. Die Klemmrippe llc hingegen ist am Grundkörper 10 befestigt. Zur Widerlagerung der modulseitigen Rastarme 26 weisen die Arretierungsflächen 40 Vorsprünge 42 (nicht sichtbar) auf. Die Vorsprünge 42 wirken mit den Erhöhungen 27 der modulseitigen Rastarme 26 sperrend zusammen. Die Arretierungsflächen 40 können mit dem Grundkörper 10 einteilig aus demselben Material bestehen, oder zweiteilig aus verschiedenen Materialien geformt sein.

In der aufgebrochenen Darstellung der Figur 4 ist nochmals die Hülse 18 und der Dichtstopfen 15 dargestellt. Durch Druck, der hier durch die Hülse, durch die Arretierung der Rastarme 26 an den Vorsprüngen 42 der Arretierungsflächen 40, durch die Aufnahmeflächen 8 der Vertiefungen 7 und zusätzlich durch die Klemmrippen lla - llc aufgebracht ist, wird der Stopfen 15 axial fest auf die Buchse 22 gepreßt und dehnt sich in radialer Richtung 19 aus.

Figur 5 veranschaulicht die Wechselwirkung der Vorsprünge 42 der Arretierungsflächen 40 mit den Erhöhungen 27 der Rastarme 26. Durch die Vorderkante 41 der Vorsprünge 42 werden die Arretierungsflächen 40 mit den Erhöhungen 27 verhakt. Seitlich, nur schematisch angedeutet, sind die Vertiefungen 7 und die Aufnahmeflächen 8 der Hülse 18 sichtbar. Zusätzlich wird das Verschlußteil durch die Preßwirkung der Klemmrippen lla - llc in der SC-Bucht 21 gehalten. Die Kopplungsbuchse 22 wird fast vollständig von den Rastarmen 26 verdeckt. Die Bauteilauslegung ist so gewählt, daß unter vertretbarem Kraftaufwand und ohne materialermüdende Belastung ein Lösen des Verschlußteils 1 aus der Bucht 21 erfolgt. Die sich einander arretierenden Flächen werden dabei voneinander getrennt.

## Patentansprüche

1. Verschlußteil (1) mit einem hülsenförmigen Teil (6), das zur Aufnahme einer optischen Kopplungsbuchse (22) ausgebildet ist und die Außenseite (24) der Buchse (22) eng anliegend umschließt,
**dadurch gekennzeichnet**, daß
koaxial in dem hülsenförmigen Teil (6) ein zentrales Dichtelement (4) angeordnet ist, daß eine stirnseitige Fase (5) des Dichtelements (4) zur Herstellung eines flächenhaften abdichtenden Kontakts mit der dem Dichtelement (4) zugewandten Stirnfläche (23) der Buchse (22) ausgebildet ist und daß das hülsenförmige Teil (6) über die Stirnfläche (9) des Dichtelements (4) hinausragt.

2. Verschlußteil nach Anspruch 1,
**dadurch gekennzeichnet**, daß
das Dichtelement (4) aus weichem Kunststoff besteht.

3. Verschlußteil nach einem der Ansprüche 1 oder 2,
**dadurch gekennzeichnet**, daß
das Dichtelement (4) ein Dichtstopfen (15) ist.

4. Verschlußteil nach einem der Ansprüche 1 bis 3,
**dadurch gekennzeichnet**, daß
hülsenförmiges Teil (6) und Dichtelement (4) an einem Grundkörper (10) angeordnet sind, an dessen Außenseiten Klemmrippen (11a...11d) vorgesehen sind.

5. Verschlußteil nach einem der Ansprüche 1 bis 4,
**dadurch gekennzeichnet**, daß
das Verschlußteil (1) einteilig ist.

6. Verschlußteil nach einem der Ansprüche 1 bis 4,
**dadurch gekennzeichnet**, daß
das Dichtelement (4), das hülsenförmige Teil (6) und der Grundkörper (10) aus verschiedenen Materialien bestehen.

7. Verschlußteil nach einem der Ansprüche 1 bis 6,
**dadurch gekennzeichnet**, daß
das hülsenförmige Teil (6) innenseitig zusätzliche Dicht- und Führungsmittel (17) trägt.

8. Verschlußteil nach einem der Ansprüche 1 bis 7,
**dadurch gekennzeichnet**, daß
das hülsenförmige Teil (6) Vertiefungen (7) mit Aufnahmeflächen (8) für buchsenseitige Rastarme aufweist.

9. Verschlußteil nach einem der Ansprüche 4 bis 8,
**dadurch gekennzeichnet**, daß
an dem Grundkörper (10) anschließend Arretierungsflächen (40) zur Fixierung des Verschlußteils (1) angebracht sind.

## Claims

1. Sealing part (1) having a sleeve-like portion (6) which is constructed so as to receive an optical coupling socket (22) and surrounds the outside (24) of the socket (22) in a tight-fitting manner,
characterised in that arranged coaxially in the sleeve-like portion (6) is a central sealing element (4), in that an end chamfer (5) of the sealing element (4) is constructed so as to produce an extensive sealing contact with the end face (23) of the socket (22) that faces the sealing element (4), and in that the sleeve-like portion (6) protrudes over the end face (9) of the sealing element (4).

2. Sealing part according to claim 1,
characterised in that the sealing element (4) consists of soft plastics material.

3. Sealing part according to one of claims 1 or 2, characterised in that the sealing element (4) is a sealing stopper (15).

4. Sealing part according to one of claims 1 to 3, characterised in that the sleeve-like portion (6) and the sealing element (4) are arranged on a base body (10), on the outsides of which are provided clamping ribs (11a ... 11d).

5. Sealing part according to one of claims 1 to 4, characterised in that the sealing part (1) is in one piece.

6. Sealing part according to one of claims 1 to 4, characterised in that the sealing element (4), the sleeve-like portion (6) and the base body (10) consist of different materials.

7. Sealing part according to one of claims 1 to 6, characterised in that the sleeve-like portion (6) carries, on the inside, additional sealing and guiding means (17).

8. Sealing part according to one of claims 1 to 7, characterised in that the sleeve-like portion (6) has indentations (7) having receiving surfaces (8) for socket-side locking arms.

9. Sealing part according to one of claims 4 to 8 characterised in that mounted adjoining the base body (10) are arresting surfaces (40) for fixing the sealing part (1).

## Revendications

1. Elément (1) de fermeture, comportant une partie (6) en forme de manchon, qui est conçue pour recevoir une douille (22) de couplage optique et entoure en application étroite la face (24) extérieure de la douille (22),
**caractérisé** en ce qu'un élément (4) d'étanchéité central est disposé coaxialement dans la partie (6) en forme de manchon, en ce qu'un chanfrein (5) est formé sur le côté frontal de l'élément (4) d'étanchéité pour réaliser un contact d'étanchéité en surface avec la face (23) frontale de la douille (22) qui est tournée vers l'élément (4) d'étanchéité, et en ce que la partie (6) en forme de manchon s'étend au-delà de la face (9) frontale de l'élément (4) d'étanchéité.

2. Elément de fermeture suivant la revendication 1, **caractérisé** en ce que l'élément (4) d'étanchéité est constitué de matière plastique souple.

3. Elément de fermeture suivant la revendication 1 ou 2, **caractérisé** en ce que l'élément (4) d'étanchéité est un bouchon (15) étanche.

4. Elément de fermeture suivant l'une des revendications 1 à 3, **caractérisé** en ce que la partie (6) en forme de manchon et l'élément (4) d'étanchéité sont disposés sur un corps (10) de base, sur la face extérieure duquel sont prévues des nervures (11a à 11d) de serrage.

5. Elément de fermeture suivant l'une des revendications 1 à 4, **caractérisé** en ce que l'élément (1) de fermeture est d'un seul tenant.

6. Elément de fermeture suivant l'une des revendications 1 à 4, **caractérisé** en ce que l'élément (4) d'étanchéité, la partie (6) en forme de manchon et le corps (10) de base sont constitués de matériaux différents.

7. Elément de fermeture suivant l'une des revendications 1 à 6, **caractérisé** en ce que la partie (6) en forme de manchon porte sur sa face intérieure des moyens (17) supplémentaires d'étanchéité et de guidage.

8. Elément de fermeture suivant l'une des revendications 1 à 7, **caractérisé** en ce que la partie (6) en forme de manchon comporte des renfoncements (7) dotés de faces (8) réceptrices pour des bras de crantage de la douille.

9. Elément de fermeture suivant l'une des revendications 4 à 8, **caractérisé** en ce que des faces (40) de blocage sont prévues en raccordement au corps (10) de base pour immobiliser l'élément (1) de fermeture.
